# EUROPEAN PATENT APPLICATION

(11) **EP 3 725 597 A1**
(43) Date of publication of application: **21.10.2020**
(21) Application number: 18889531.2
(22) Date of filing: 10.12.2018
(51) Int. Cl.: B60R 16/023, B60R 1/00, H04N 7/18, H04N 5/232, H04N 5/268, G06K 9/00

(54) **MONITORING SYSTEM AND METHOD FOR TARGET BODY ON VEHICLE, AND VEHICLE**

(30) Priority: 14.12.2017 CN 201711339822
(71) Applicant: Nio Nextev Limited, Hong Kong (CN)
(72) Inventor: ZHANG, Boning, Shanghai 201804 (CN); WANG, Ying, Shanghai 201804 (CN)
(74) Representative: Vossius & Partner Patentanwälte Rechtsanwälte mbB
(86) International application number: PCT/CN2018/120098
(87) International publication number: WO 2019/114661

(57) **Abstract**

Disclosed are a monitoring system and method for a target body in a vehicle, and a vehicle comprising the system above. In the monitoring system, a target detection device (11) can automatically detect a region where a target body is located inside a vehicle body, and a target display device (13) displays an image of the region, wherein the target display device (13) is arranged on a console of the vehicle. Meanwhile, the monitoring method can also control the target display device (13) to automatically display the image of the region where the target body is located inside the vehicle.

## Description

### Technical Field

The invention relates to the technical field of monitoring, and in particular to a monitoring system and method for a target body in a vehicle, and a vehicle.

### Background Art

In order to improve children's safety in vehicles, a child seat is usually mounted on a rear seat of an automobile, for example, mounted behind the driver. In this case, when there is no third person to look after the child, the driver needs to check the state of the child in real time during driving, for example, by adjusting an inside rearview mirror or turning around, which will greatly increase the risk of driving.

### Summary of the Invention

In order to solve the above problems in the prior art, that is, to solve the technical problem of how to enable a driver to accurately and conveniently monitor a child, the invention provides a monitoring system and method for a target body in a vehicle, and a vehicle.

In a first aspect, the monitoring system for a target body in a vehicle in the invention comprises:
a target detection device configured to detect a region where a target body is located inside a vehicle body;
an onboard camera device configured to acquire, according to the region where the target body is located that is detected by the target detection device, an image of the region; and
a target display device configured to display the image of the region where the target body is located that is acquired by the onboard camera device.

Further, one preferred technical solution provided in the invention is as follows:
the target detection device comprises a first detection module; and
the first detection module is configured to perform, after the onboard camera device is started, human body recognition on the image of the interior of the vehicle body that is acquired by the onboard camera device, and determine, according to a recognition result, the region where the target body is located.

Further, one preferred technical solution provided in the invention is as follows:
the target detection device comprises a second detection module; and the second detection module is configured to determine, by means of sound source localization, the region where the target body is located.

Further, one preferred technical solution provided in the invention is as follows:
the target detection device comprises a third detection module; and the third detection module is configured to determine, by means of infrared detection, the region where the target body is located.

Further, one preferred technical solution provided in the invention is as follows:
the third detection module comprises a human body infrared sensor.

Further, one preferred technical solution provided in the invention is as follows:
the target detection device comprises a fourth detection module; and the fourth detection module is configured to detect the gravity borne by a vehicle seat, and determine, according to a detection result, the region where the target body is located.

Further, one preferred technical solution provided in the invention is as follows:
the fourth detection module comprises one or more weighing sensors, and the weighing sensors are arranged at the underside of the vehicle seat.

Further, one preferred technical solution provided in the invention is as follows:
the target detection device further comprises a voiceprint recognition module; the voiceprint recognition module is configured to determine, by means of voiceprint recognition, whether the target body is a child; and
the onboard camera device is further configured to acquire, if the voiceprint recognition module determines that the target body is a child, an image of the region where the child is located.

Further, one preferred technical solution provided in the invention is as follows:
the target detection device comprises a first display control module; and the first display control module is configured to control, after the region where the target body is located is detected by the target detection device, the target display device to display the image corresponding to the region.

Further, one preferred technical solution provided in the invention is as follows:
the target detection device further comprises a second display control module; and
the second display control module is configured to adjust the image currently displayed by the target display device according to a currently entered control instruction and specify an image to be finally displayed by the target display device, if the region where the target body is located is not detected by the target detection device.

Further, one preferred technical solution provided in the invention is as follows:
the target display device comprises an instruction collection module; the instruction collection module is configured to collect a touch control instruction; and
the second display control module is further configured to control, after receiving the touch control instruction sent by the instruction collection module, the target display device to display an image of the region corresponding to the touch control instruction.

Further, one preferred technical solution provided in the invention is as follows:
the target display device is a touch display device.

Further, one preferred technical solution provided in the invention is as follows:
the target display device further comprises an image magnification module and/or an image screen-splitting module;
the image magnification module is configured to magnify the image currently displayed by the target display device; and
the image screen-splitting module is configured to split a screen for a plurality of images currently displayed by the target display device.

Further, one preferred technical solution provided in the invention is as follows:
the target display device is arranged on a console of the vehicle.

Further, one preferred technical solution provided in the invention is as follows:
there are one or more onboard camera devices.

In a second aspect, the monitoring method for a target body in a vehicle in the invention comprises:
detecting a region where a target body is located inside a vehicle body;
acquiring, by an onboard camera device, an image of the region where the target body is located; and
displaying the acquired image by a target display device.

Further, one preferred technical solution provided in the invention is as follows:
the step of "detecting a region where a target body is located inside a vehicle body" specifically comprises:
performing, after the onboard camera device is started, human body recognition on the image of the interior of the vehicle body that is acquired by the onboard camera device, and determining, according to a recognition result, the region where the target body is located.

Further, one preferred technical solution provided in the invention is as follows:
the step of "detecting a region where a target body is located inside a vehicle body" specifically comprises: determining, by means of sound source localization, the region where the target body is located.

Further, one preferred technical solution provided in the invention is as follows:
the step of "detecting a region where a target body is located inside a vehicle body" specifically comprises: determining, by means of infrared detection, the region where the target body is located.

Further, one preferred technical solution provided in the invention is as follows:
the step of "detecting a region where a target body is located inside a vehicle body" specifically comprises: detecting the gravity borne by a vehicle seat, and determining, according to a detection result, the region where the target body is located.

Further, one preferred technical solution provided in the invention is as follows:
after the step of "detecting a region where a target body is located inside a vehicle body", the method comprises:
determining, by means of voiceprint recognition, whether the target body is a child, and acquiring, by the onboard camera device, an image of the region where the child is located if so.

Further, one preferred technical solution provided in the invention is as follows:
the step of "displaying the image by a target display device" specifically comprises:
controlling, after the region where the target body is located is detected, the target display device to display the image corresponding to the region.

Further, one preferred technical solution provided in the invention is as follows:
the step of "displaying the image by a target display device" further comprises:
adjusting the image currently displayed by the target display device according to a currently entered control instruction and specifying an image to be finally displayed by the target display device, if the region where the target body is located is not detected.

Further, one preferred technical solution provided in the invention is as follows:
before the step of "adjusting the image currently displayed by the target display device according to a currently entered control instruction", the method comprises: collecting a control instruction by the target display device.

Further, one preferred technical solution provided in the invention is as follows:
the target display device is a touch display device, and the control instruction is a touch control instruction.

Further, one preferred technical solution provided in the invention is as follows:
the step of "displaying the image by a target display device" specifically comprises:
magnifying a partial image currently displayed by the target display device; and/or
splitting a screen for a plurality of partial images currently displayed by the target display device.

In a third aspect, the vehicle in the invention comprises the monitoring system for a target body in a vehicle as described in the above technical solution.

Compared with the closest prior art, the technical solutions described above have at least the following beneficial effects:
1. the monitoring system in the invention mainly comprises a target detection device, an onboard camera device, and a target display device. The target display device is arranged on a console, the target detection device may detect a region where a target body is located inside a vehicle body, the onboard camera device may acquire an image of the region, and the target display device may display the image of the region. Based on the above structure, a driver can monitor the target body in real time without turning around or adjusting a rearview mirror. Further, a first detection module in the target detection device may perform, after the onboard camera device is started, human body recognition on the image of the interior of the vehicle body that is acquired by the onboard camera device, and determine, according to a recognition result, the region where the target body is located, which makes it unnecessary for the driver to manually control and is easy to operate.
2. In the invention, the target detection device may detect, according to image information, sound information, infrared radiation energy or weight of the target body, the region where the target body is located inside the vehicle body.
3. In the invention, the target detection device comprises a first display control module and a second display control module. Specifically, the first display control module may control, after the region where the target body is located is detected by the target detection device, the target display device to display the image of the region. The second display control module may adjust the image currently displayed by the target display device according to a currently entered control instruction and specify an image to be finally displayed by the target display device, if the region where the target body is located is not detected by the target detection device. Based on the automatic + manual control structure above, it can be ensured that the monitoring system accurately acquires the image of the region where the target body is located.
4. In the invention, the target display device may comprise an image magnification module and/or an image screen-splitting module. Specifically, the image magnification module may magnify the image currently displayed by the target display device, so that a user can view the target body at a short distance. The image screen-splitting module may split a screen for a plurality of partial images currently displayed by the target display device, so that the user can monitor a plurality of target bodies in the vehicle comprehensively. Further, when there is only one target body in the vehicle, the image screen-splitting module may also split a screen for the image of the region where the target body is located and other preset images, wherein the other preset images may be manipulation display images of the monitoring system or manipulation display images of an onboard infotainment system, etc.

### Brief Description of the Drawings

Fig. 1 is a schematic diagram of a main structure of a monitoring system for the state of a child in a vehicle according to an embodiment of the invention; and
Fig. 2 is a schematic diagram of main steps of a monitoring method for the state of a child in a vehicle according to an embodiment of the invention.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention.

In order to ensure that a driver can monitor the state of a child in real time without affecting the driving safety, the invention provides a monitoring system for a target body in a vehicle. The system can automatically recognize a target body according to an image of the interior of a vehicle body, for example, a region where the child is located, and track and display the image of the region in real time, so that the driver can monitor the target body without turning around or adjusting a rearview mirror.

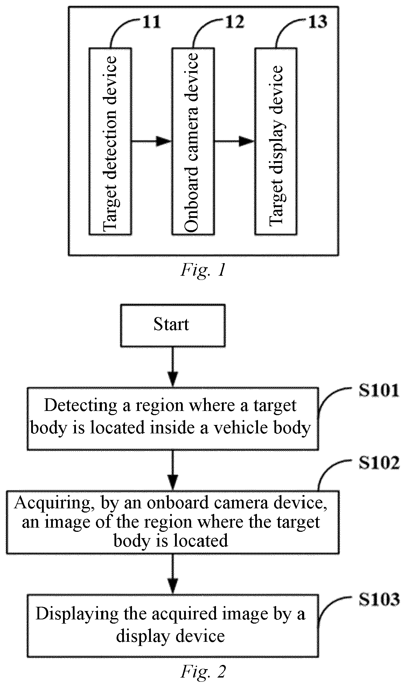

Referring to Fig. 1, Fig. 1 exemplarily shows a main structure of a monitoring system for a target body in a vehicle in this embodiment. As shown in Fig. 1, the monitoring system for a target body in a vehicle in this embodiment may comprise the following structures: a target detection device 11, an onboard camera device 12, and a target display device 13. Specifically, the target detection device 11 may be configured to detect a region where a target body is located inside a vehicle body. The onboard camera device 12 may be configured to acquire, according to the region where the target body is located that is detected by the target detection device 11, an image of the region. The target display device 13 may be configured to display the image of the region where the target body is located that is acquired by the onboard camera device 12, and. further, the target display device 13 may be mounted on a console of the vehicle in order to facilitate the driver in viewing a display screen of the target display device.

The monitoring system for a target body in this embodiment may comprise one or more onboard camera devices 12. The plurality of onboard camera devices 12 may monitor one target body in the vehicle at multiple angles, and also monitor a plurality of target bodies in the vehicle respectively.

In this embodiment, the target detection device 11 may determine, according to different state variables of the target body, the region where the target body is located inside the vehicle body. The state variables of the target body may be image information, sound information, infrared radiation energy or weight.

In a first preferred implementation of this embodiment, the target detection device 11 may determine, according to the image information of the target body, the region where the target body is located. The target detection device 11 may comprise a first detection module, a first display control module, and a second display control module.

Specifically, in this embodiment, the first detection module may be configured to perform, after the onboard camera device 12 is started, human body recognition on the image of the interior of the vehicle body that is acquired by the onboard camera device 11, and determine, according to a recognition result, the region where the target body is located. In this embodiment, the first detection module may recognize, by using a conventional human body recognition algorithm, the image of the interior of the vehicle body that is acquired by the onboard camera device 12. For example, the first detection module may recognize the image by using a face recognition algorithm based on a convolutional neural network.

In this embodiment, the first display control module may be configured to control, after the region where the target body is located is detected by the target detection device 11, the target display device 13 to display the image corresponding to the region.

In this embodiment, the second display control module may be configured to adjust a partial image currently displayed by the target display device 13 according to a currently entered control instruction and specify a partial image to be finally displayed by the target display device 13, if the region where the target body is located is not detected by the target detection device 11.

Preferably, in this embodiment, the display device 13 is a touch display device, and at the same time, the device may further comprise an instruction collection module. The instruction collection module may be configured to collect a touch control instruction. Based on this, in this embodiment, the second display control module may be further configured to control, after receiving the touch control instruction sent by the instruction collection module, the target display device 13 to display an image of the region corresponding to the touch control instruction.

For example, when the display device 13 is a target display device which comprises a touch screen, a user may change the image currently displayed on the touch screen by slide the finger, and may also select a control button displayed on the touch screen with the finger so as to select an image to be finally displayed on the touch screen. In this implementation, the second display control module may adjust, according to a control instruction generated by a user sliding the finger, the image displayed on the touch screen, and control, according to a control instruction generated by the user clicking and selecting the corresponding control button with the finger, the target display device 13 to display an image selected by the user.

Further, in this embodiment, the target display device 13 shown in Fig. 1 may also comprise an image magnification module and/or an image screen-splitting module. Specifically, the image magnification module may be configured to magnify each image currently displayed by the target display device 13, so that a user can clearly see the target body. The image screen-splitting module may be configured to display, in a split-screen manner, a plurality of images currently displayed by the target display device 13, that is, display, in a split-screen manner, an image of a region where each of a plurality of target bodies is located in the vehicle, so that the user can monitor all target bodies in the vehicle comprehensively. Preferably, when there is only one target body in the vehicle, the image screen-splitting module may also split a screen for the image of the region where the target body is located and other preset images, wherein the other preset images may be manipulation display images of the monitoring system or manipulation display images of an onboard infotainment system, etc.

It should be noted that although the invention only discloses the implementation of determining, by means of human body recognition on the image, the region where the target body is located and then monitoring the target body, the technical solution of adaptively adjusting a recognition algorithm in a target recognition module according to the monitored target to monitor the state of the monitored target without departing from the principle of the invention will still fall within the scope of protection of the invention. For example, after the human body recognition algorithm is replaced with a recognition algorithm for a specific object, the state of the specific object is monitored, etc.

In a second preferred implementation of this embodiment, the target detection device 11 may determine, according to the sound information of the target body, the region where the target body is located. The target detection device 11 may comprise a second detection module, a voiceprint recognition module, a first display control module, and a second display control module.

Specifically, in this embodiment, the second detection module may be configured to determine, by means of sound source localization, the region where the target body is located. The voiceprint recognition module may be configured to determine, by means of voiceprint recognition, whether the target body is a child, and if the voiceprint recognition module determines that the target body is a child, the onboard camera device may acquire an image of the region where the child is located. The first display control module and the second display control module are respectively the same as the first display control module and the second display control module described in the foregoing embodiment, which will not be repeated here for the sake of concise description.

In a third preferred implementation of this embodiment, the target detection device 11 may determine, according to the infrared radiation energy of the target body, the region where the target body is located. The target detection device 11 may comprise a third detection module, a voiceprint recognition module, a first display control module, and a second display control module.

Specifically, in this embodiment, the third detection module may be configured to determine, by means of infrared detection, the region where the target body is located. Preferably, the third detection module may comprise a human body infrared sensor. The voiceprint recognition module is the same as the voiceprint recognition module described in the foregoing preferred implementation, and the first display control module and the second display control module are respectively the same as the first display control module and the second display control module described in the foregoing embodiment, which will not be repeated here for the sake of concise description.

In a fourth preferred implementation of this embodiment, the target detection device 11 may determine, according to the weight of the target body, the region where the target body is located. The target detection device 11 may comprise a fourth detection module, a voiceprint recognition module, a first display control module, and a second display control module.

Specifically, in this embodiment, the fourth detection module may be configured to detect the gravity borne by a vehicle seat, and determine, according to a detection result, the region where the target body is located. Preferably, the fourth detection module may comprise one or more weighing sensors, and the weighing sensors are arranged at the underside of the vehicle seat. The voiceprint recognition module is the same as the voiceprint recognition module described in the foregoing preferred implementation, and the first display control module and the second display control module are respectively the same as the first display control module and the second display control module described in the foregoing embodiment, which will not be repeated here for the sake of concise description.

Based on the monitoring system for a target body in a vehicle as described in above system embodiment, the invention further provides a vehicle, which may comprise the monitoring system for a target body in a vehicle, and based on the monitoring system, the driver of the vehicle can accurately and conveniently monitor the target body in the vehicle.

Those skilled in the art may understand that the monitoring system for a target body in a vehicle further comprises some other well-known structures, such as a processor, a controller, and a memory. The memory comprises, but is not limited to, a random access memory, a flash memory, a read-only memory, a programmable read-only memory, a volatile memory, a non-volatile memory, a serial memory, a parallel memory or a register, etc. The processor comprises, but is not limited to, a CPLD/FPGA, a DSP, an ARM processor, an MIPS processor, etc. In order to not unnecessarily obscure the embodiments of the disclosure, these well-known structures are not shown in Fig. 1.

It should be appreciated that the number of the devices/modules in Fig. 1 is merely illustrative. According to actual needs, there may be any number of each type of devices/module.

Those skilled in the art can understand that the devices of the monitoring system in the embodiment may be adaptively changed and arranged in one or more monitoring systems different from those in the embodiment, and the devices in the embodiment may be combined into one device or divided into multiple modules. Unless expressly stated otherwise, each feature disclosed in the description (including the accompanying claims, abstract and drawings) may be replaced by an alternative feature that provides the same, equivalent or similar purpose.

Further, the invention also provides a monitoring method for a target body in a vehicle. The monitoring method for a target body in a vehicle in this embodiment will be described below with reference to the accompanying drawing.

Referring to Fig. 2, Fig. 2 exemplarily shows main steps of a monitoring method for a target body in a vehicle in this embodiment. As shown in Fig. 2, in this embodiment, the target body in the vehicle may be monitored according to the following steps, which are specifically:
step S101: detecting a region where a target body is located inside a vehicle body.
Step S102: acquiring, by an onboard camera device, an image of the region where the target body is located.

In this embodiment, when one onboard camera device is used to acquire the image of the interior of the vehicle body, it may be mounted at a preset position, for example, above a rear seat of the vehicle. When a plurality of onboard camera devices are used to acquire the image of the interior of the vehicle body, these onboard camera devices may be arranged inside the vehicle in a dispersed manner.

Step S103: displaying the acquired image by a target display device.

In this embodiment, the target display device may be a target display device arranged on a console of the vehicle, so that a driver can view the state of the target body in real time through the target display device.

Further, in this embodiment, the region where the target body is located inside the vehicle body may be determined according to different state variables of the target body. The state variables of the target body may be image information, sound information, infrared radiation energy or weight.

In a first preferred implementation of this embodiment, according to the monitoring method shown in Fig. 1, after the onboard camera device is started, human body recognition may be performed on the image of the interior of the vehicle body that is acquired by the onboard camera device, and the region where the target body is located can be determined according to a recognition result. Then, the following operations are performed: controlling, after the region where the target body is located is detected, the target display device to display the image corresponding to the region; and acquiring a control instruction by the target display device, adjusting the image currently displayed by the target display device according to a currently entered control instruction and specifying an image to be finally displayed by the target display device, if the region where the target body is located is not detected.

In this embodiment, after the onboard camera device is started, a human body recognition algorithm, for example, a face recognition algorithm, may be used immediately to recognize the received image, and the region where the target body is located is detected according to a real-time recognition result, so that a partial image of the region where the target body is located can be accurately acquired after the region where the target body is located changes.

It should be noted that although this embodiment only discloses the implementation of determining, by means of human body recognition on the image, the region where the target body is located and then monitoring the target body, the technical solution of adaptively adjusting a recognition algorithm according to the monitored target to monitor the state of the monitored target without departing from the principle of the invention will still fall within the scope of protection of the invention. For example, after the human body recognition algorithm is replaced with a recognition algorithm for a specific object, the state of the specific object is monitored, etc.

In a second preferred implementation of this embodiment, according to the monitoring method shown in Fig. 1, the region where the target body is located may be determined by means of sound source localization. Then, the following operations are performed: controlling, after the region where the target body is located is detected, the target display device to display the image corresponding to the region; and acquiring a control instruction by the target display device, adjusting the image currently displayed by the target display device according to a currently entered control instruction and specifying an image to be finally displayed by the target display device, if the region where the target body is located is not detected. Preferably, in this embodiment, it can be determined, by means of voiceprint recognition, whether the target body is a child, and if so, the onboard camera device acquires an image of the region where the child is located.

In a third preferred implementation of this embodiment, according to the monitoring method shown in Fig. 1, the region where the target body is located may be determined by means of infrared detection. Then, the following operations are performed: controlling, after the region where the target body is located is detected, the target display device to display the image corresponding to the region; and acquiring a control instruction by the target display device, adjusting the image currently displayed by the target display device according to a currently entered control instruction and specifying an image to be finally displayed by the target display device, if the region where the target body is located is not detected. Preferably, in this embodiment, it can be determined, by means of voiceprint recognition, whether the target body is a child, and if so, the onboard camera device acquires an image of the region where the child is located.

In a fourth preferred implementation of this embodiment, according to the monitoring method shown in Fig. 1, the gravity borne by a vehicle seat may be detected, and the region where the target body is located may be determined according to a detection result. Then, the following operations are performed: controlling, after the region where the target body is located is detected, the target display device to display the image corresponding to the region; and acquiring a control instruction by the target display device, adjusting the image currently displayed by the target display device according to a currently entered control instruction and specifying an image to be finally displayed by the target display device, if the region where the target body is located is not detected. Preferably, in this embodiment, it can be determined, by means of voiceprint recognition, whether the target body is a child, and if so, the onboard camera device acquires an image of the region where the child is located.

Further, in this embodiment, the monitoring method shown in Fig. 2 also comprises the following steps: when the image is displayed by the target display device, the image currently displayed by the target display device may be magnified, so that a user can view the target body at a short distance. Alternatively, when the target display device is controlled to display images, various images corresponding to a plurality of target bodies that are currently displayed by the target display device may also be displayed in a split-screen manner, so that the user can view all the target bodies.

Although the steps are described in the foregoing order in this embodiment, those skilled in the art can understand that in order to achieve the effects of this embodiment, different steps are not necessarily performed in this order, but can be performed simultaneously (in parallel) or in reverse order, and these simple variations are within the scope of protection of the invention.

Furthermore, those skilled in the art should understand that although some embodiments described herein comprise certain features comprised in other embodiments, instead of other features, the combinations of the features of different embodiments mean being within the scope of the invention and forming different embodiments. For example, in the claims of the invention, any one of the embodiments set forth thereby can be used in the manner of any combination.

Various embodiments regarding components in the invention may be implemented in hardware, or implemented by software modules running on one or more processors, or implemented in combinations thereof. Those skilled in the art should understand that a microprocessor or a digital signal processor (DSP) may be used in practice to implement some or all of the functions of some or all of the components in the server and client according to the embodiments of the invention. The invention may also be implemented as devices or device programs (for example, PC programs and a PC program products) for performing some or all of the methods as described herein. Such programs for implementing the invention may be stored on a PC readable medium, or may be in the form of one or more signals. Such signals may be obtained by downloading from an Internet website, or provided on a carrier signal, or provided in any other form.

It should be noted that the description of the invention made in the above-mentioned embodiments is not to limit the invention, and those skilled in the art may design alternative embodiments without departing from the scope of the appended claims. In the claims, any reference signs placed between parentheses should not be construed as limitations on the claims. The word "comprise" does not exclude the presence of elements or steps not listed in the claims. The word "a" or "an" in front of an element does not exclude the presence of a plurality of such elements. The invention may be implemented by means of hardware comprising several different elements and by means of a suitably programmed PC. In the unit claims enumerating several devices, several of these devices may be specifically embodied by one and the same item of hardware. The usage of the words, such as first and second, does not represent any order. These words may be interpreted as names.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention.

## Claims

1. A monitoring system for a target body in a vehicle, **characterized by** comprising:
a target detection device configured to detect a region where a target body is located inside a vehicle body;
an onboard camera device configured to acquire, according to the region where the target body is located that is detected by the target detection device, an image of the region; and
a target display device configured to display the image of the region where the target body is located that is acquired by the onboard camera device.

2. The monitoring system according to claim 1, **characterized in that** the target detection device comprises a first detection module; and
the first detection module is configured to perform, after the onboard camera device is started, human body recognition on the image of the interior of the vehicle body that is acquired by the onboard camera device, and determine, according to a recognition result, the region where the target body is located.

3. The monitoring system according to claim 1, **characterized in that** the target detection device comprises a second detection module; and the second detection module is configured to determine, by means of sound source localization, the region where the target body is located.

4. The monitoring system according to claim 1, **characterized in that** the target detection device comprises a third detection module; and the third detection module is configured to determine, by means of infrared detection, the region where the target body is located.

5. The monitoring system according to claim 4, **characterized in that** the third detection module comprises a human body infrared sensor.

6. The monitoring system according to claim 1, **characterized in that** the target detection device comprises a fourth detection module; and the fourth detection module is configured to detect the gravity borne by a vehicle seat, and determine, according to a detection result, the region where the target body is located.

7. The monitoring system according to claim 6, **characterized in that** the fourth detection module comprises one or more weighing sensors, and the weighing sensors are arranged at the underside of the vehicle seat.

8. The monitoring system according to any one of claims 2 to 7, **characterized in that** the target detection device further comprises a voiceprint recognition module; the voiceprint recognition module is configured to determine, by means of voiceprint recognition, whether the target body is a child; and
the onboard camera device is further configured to acquire, if the voiceprint recognition module determines that the target body is a child, an image of the region where the child is located.

9. The monitoring system according to any one of claims 1 to 7, **characterized in that** the target detection device comprises a first display control module; and the first display control module is configured to control, after the region where the target body is located is detected by the target detection device, the target display device to display the image corresponding to the region.

10. The monitoring system according to claim 9, **characterized in that** the target detection device further comprises a second display control module; and
the second display control module is configured to adjust the image currently displayed by the target display device according to a currently entered control instruction and specify an image to be finally displayed by the target display device, if the region where the target body is located is not detected by the target detection device.

11. The monitoring system according to claim 10, **characterized in that** the target display device comprises an instruction collection module; the instruction collection module is configured to collect a touch control instruction; and
the second display control module is further configured to control, after receiving the touch control instruction sent by the instruction collection module, the target display device to display an image of the region corresponding to the touch control instruction.

12. The monitoring system according to claim 11, **characterized in that** the target display device is a touch display device.

13. The monitoring system according to any one of claims 1 to 7, **characterized in that** the target display device further comprises an image magnification module and/or an image screen-splitting module;
the image magnification module is configured to magnify the image currently displayed by the target display device; and
the image screen-splitting module is configured to split a screen for a plurality of images currently displayed by the target display device.

14. The monitoring system according to claim 13, **characterized in that** the target display device is arranged on a console of the vehicle.

15. The monitoring system according to any one of claims 1 to 11, **characterized in that** there are one or more onboard camera devices.

16. A monitoring method for a target body in a vehicle, **characterized by** comprising:
detecting a region where a target body is located inside a vehicle body;
acquiring, by an onboard camera device, an image of the region where the target body is located; and
displaying the acquired image by a target display device.

17. The monitoring method according to claim 16, **characterized in that** the step of "detecting a region where a target body is located inside a vehicle body" specifically comprises:
performing, after the onboard camera device is started, human body recognition on the image of the interior of the vehicle body that is acquired by the onboard camera device, and determining, according to a recognition result, the region where the target body is located.

18. The monitoring method according to claim 16, **characterized in that** the step of "detecting a region where a target body is located inside a vehicle body" specifically comprises: determining, by means of sound source localization, the region where the target body is located.

19. The monitoring method according to claim 16, **characterized in that** the step of "detecting a region where a target body is located inside a vehicle body" specifically comprises: determining, by means of infrared detection, the region where the target body is located.

20. The monitoring method according to claim 16, **characterized in that** the step of "detecting a region where a target body is located inside a vehicle body" specifically comprises: detecting the gravity borne by a vehicle seat, and determining, according to a detection result, the region where the target body is located.

21. The monitoring method according to any one of claims 18 to 20, **characterized in that** after the step of "detecting a region where a target body is located inside a vehicle body", the method comprises:
determining, by means of voiceprint recognition, whether the target body is a child, and acquiring, by the onboard camera device, an image of the region where the child is located if so.

22. The monitoring method according to any one of claims 16 to 20, **characterized in that** the step of "displaying the image by a target display device" specifically comprises:
controlling, after the region where the target body is located is detected, the target display device to display the image corresponding to the region.

23. The monitoring method according to claim 20, **characterized in that** the step of "displaying the image by a target display device" further comprises:
adjusting the image currently displayed by the target display device according to a currently entered control instruction and specifying an image to be finally displayed by the target display device, if the region where the target body is located is not detected.

24. The monitoring method according to claim 23, **characterized in that** before the step of "adjusting the image currently displayed by the target display device according to a currently entered control instruction", the method comprises: collecting a control instruction by the target display device.

25. The monitoring method according to claim 24, **characterized in that**
the target display device is a touch display device, and the control instruction is a touch control instruction.

26. The monitoring method according to claims 16 to 20, **characterized in that** the step of "displaying the image by a target display device" specifically comprises:
magnifying a partial image currently displayed by the target display device; and/or
splitting a screen for a plurality of partial images currently displayed by the target display device.

27. A vehicle, **characterized by** comprising a monitoring system for a target body in a vehicle according to any one of claims 1 to 15.
